# EUROPÄISCHE PATENTANMELDUNG

(11) **EP 1 589 653 A2**
(43) Veröffentlichungstag der Anmeldung: **26.10.2005**
(21) Anmeldenummer: 05008015.9
(22) Anmeldetag: 13.04.2005
(51) Int. Cl.: H02P 6/16

(54) **Vorrichtung zum Betrieb eines Synchronmotors**

(30) Priorität: 21.04.2004 DE 102004019284
(71) Anmelder: Aradex AG, 73547 Lorch (DE)
(72) Erfinder: Vetter, Thomas, 73547 Lorch (DE)
(74) Vertreter: Ruckh, Rainer Gerhard

(57) **Zusammenfassung**

Die erfindungsgemäße Vorrichtung (1) zum Betrieb eines Synchronmotors (2)umfasst eine erste Überwachungseinheit, in welcher zur Generierung eines ersten Steuersignals in Abhängigkeit der Messwerte eines Messgebers die Einhaltung eines Grenzwerts der Geschwindigkeit des Synchronmotors (2) überprüft wird. In einer zweiten Überwachungseinheit wird die Einhaltung eines Grenzwerts des Kommutierungswinkels des Synchronmotors (2) oder dessen zeitlicher Änderung überprüft. Weiterhin ist wenigstens eine Schalteinheit vorgesehen, mittels derer der Synchronmotor (2) zur Einhaltung der Grenzwerte in Abhängigkeit der Steuersignale angesteuert wird.

## Beschreibung

Die Erfindung betrifft eine Vorrichtung zum Betrieb eines Synchronmotors.

Derartige Synchronmotoren, die insbesondere als Servo- oder Schrittmotoren ausgebildet sein können, werden als Antriebe von Maschinen und Anlagen in unterschiedlichen industriellen Applikationen eingesetzt. Die Synchronmotoren bilden permanenterregte elektrische Maschinen, die insbesondere als Schrittmotoren oder Servomotoren ausgebildet sein können.

Zur Erzielung einer hohen Positioniergenauigkeit werden derartige Synchronmotoren mit Positionsregelungen betrieben. Diese umfassen eine Sensorik in Form wenigstens eines Messgebers, mittels derer eine Lageermittlung des Synchronmotors durchgeführt wird. Der oder die Messgeber erfassen dabei die aktuellen Positionen von Primärteilen, welche zur Erzeugung von Magnetfeldern von vorgegebenen Strömen durchflossen sind, relativ zu den Positionen von magnetischen Sekundärteilen. Bei rotativen Synchronmotoren, insbesondere Schrittmotoren, erfolgt mittels der Sensorik die Bestimmung der aktuellen Istposition des Rotors. In Abhängigkeit der Signale dieser Sensorik wird in einem Regelkreis die Position des Synchronmotors geregelt. Entsprechend werden bei Linearmotoren mittels einer Sensorik die Positionen von Läufern über zugeordnete Spulen ermittelt und geregelt.

Mit derartigen positionsgeregelten Synchronmotoren können Produktionsabläufe in Maschinen und Anlagen mit hoher Präzision und Reproduzierbarkeit gesteuert werden. Insbesondere als Servomotoren ausgebildete Synchronmotoren weisen zudem eine hohe Dynamik auf, wodurch besonders hohe Produktivitäten der Maschinen und Anlagen erzielt werden können.

Nachteilig bei derartigen Synchronmotoren ist jedoch, dass aufgrund deren relativ aufwändigen Aufbaus die Ausfallwahrscheinhchkeiten relativ hoch sind. Insbesondere stellt die Sensorik zur Positionsregelung einen Risikofaktor dar. Ein Defekt in der Sensorik führt zu einem Ausfall des Synchronmotors und damit zu Produktionsausfällen in den mit dem Synchronmotor gesteuerten Anlagen.

Aus der DE 102 07 549 A1 ist eine Vorrichtung bekannt, bei welcher der Synchronmotor in einem Normalbetrieb betrieben wird, in welchem die Signale wenigstens eines Messgebers zur Positionsregelung des Synchronmotors verwendet werden. Weiterhin ist der Synchronmotor in einen Notlaufbetrieb umschaltbar, in welchem der Synchronmotor in einem Schrittbetrieb und/oder mit einer sensorlosen Positionsregelung betrieben wird.

Mit dieser Umschaltmöglichkeit der Betriebsart kann die Verfügbarkeit des Synchronmotors erheblich erhöht werden. Dabei wird die sensorgesteuerte Positionsregelung im Normalbetrieb vorzugsweise nur eingesetzt, falls der Messgeber keinen Defekt aufweist. Sobald ein Defekt oder allgemein ein unsicherer Betrieb des Messgebers vorliegt, erfolgt vorzugsweise selbsttätig ein Umschalten auf den Notlaufbetrieb, in welchem der Synchronmotor ohne externe Sensorik, das heißt ohne Messgeber betrieben wird.

Damit ist gewährleistet, dass der Synchronmotor bei Ausfall des Messgerbers funktionsfähig bleibt und im Notlaufbetrieb weiter betrieben werden kann.

Hiermit wird zwar die Verfügbarkeit des Synchronmotors signifikant erhöht. Jedoch ist die so ausgebildete Vorrichtung in sicherheitstechnischen Anwendungen nicht einsetzbar, da die Vorrichtung bei Auftreten eines Fehlers nicht in einen kontrollierten sicheren Zustand übergeht.

Der Erfindung liegt die Aufgabe zugrunde eine Vorrichtung der eingangs genannten Art derart auszubilden, dass diese in sicherheitstechnischen Anwendungen einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zum Betrieb eines Synchronmotors, wobei mit dem Begriff Synchronmotor neben permanent erregten Motoren auch Reluktanzmotoren umfasst sind. Die Vorrichtung weist eine erste Überwachungseinheit auf, in welcher zur Generierung eines ersten Steuersignals in Abhängigkeit der Messwerte eines Messgebers die Einhaltung eines Grenzwerts der Geschwindigkeit des Synchronmotors überprüft wird. Weiterhin weist die erfindungsgemäße Vorrichtung eine zweite Überwachungseinheit auf, in welcher die Einhaltung eines Grenzwerts des Kommutierungswinkels des Synchronmotors oder dessen zeitlicher Änderung überprüft wird. Mit wenigstens einer Schalteinheit wird der Synchronmotor zur Einhaltung der Grenzwerte in Abhängigkeit der Steuersignale angesteuert.

Durch die beiden Überwachungseinheiten weist die erfindungsgemäße Vorrichtung einen zweikanaligen, redundanten Aufbau auf. Damit wird eine zyklische Fehlerkontrolle des Synchronmotors ermöglicht, so dass die Vorrichtung in sicherheitsrelevanten Anwendungen einsetzbar ist.

Je nach gefordertem Sicherheitsniveau erfolgt zweckmäßigerweise eine gegenseitige Überwachung der Überwachungseinheiten. Hierzu kontrollieren sich die Überwachungseinheiten hinsichtlich ihrer Funktionen zyklisch.

In einer vorteilhaften Ausführungsform der Erfindung werden die Komponenten der dem Synchronmotor zugeordneten Verstärkereinheit und die externe Steuerung, mittels derer der Synchronmotor gesteuert wird, für die Durchführung der zweikanaligen Überwachung des Synchronmotors genutzt. Damit können die Überwachungsfunktionen des Synchronmotors mit einem äußerst geringen schaltungstechnischen Aufwand durchgeführt werden.

Zur Durchführung der Überwachungsfunktion sind zwei unabhängige Systeme, insbesondere Messsysteme vorgesehen, die jeweils von einer der Überwachungseinheiten gesteuert werden. Mit der ersten Überwachungseinheit, die bevorzugt von der externen Steuerung gebildet ist, wird in Abhängigkeit der Messwerte eines Messgebers die Geschwindigkeit des Synchronmotors erfasst.

Mit der zweiten Überwachungseinheit, die bevorzugt von einem im Verstärker integrierten Funktionsmodul zur Ansteuerung des Synchronmotors gebildet ist, wird die Kommutierung des Synchronmotors überwacht.

Dabei liegt der Erfindung die Erkenntnis zugrunde, dass durch eine Begrenzung der Kommutierung des Synchronmotors die sichere Einhaltung einer Grenzgeschwindigkeit des Synchronmotors und insbesondere ein sicherer Halt des Synchronmotors gewährleistet werden kann. Damit können Gefährdungen, die Folgen der Kraftwirkungen des Motors sind, unterbunden werden.

Bei einem Synchronmotor ist der überstrichene Kommutierungswinkel je Zeiteinheit ein Maß für die Richtung und Drehzahl des Rotors gegenüber dem Stator oder generell eines Primärteils gegenüber einem Sekundärteil. Durch eine Begrenzung dieser Kommutierung auf einen Grenzwert mittels des Funktionsmoduls kann die Einhaltung einer Grenzgeschwindigkeit, insbesondere auch der Stillstand des Synchronmotors in einer vorgegebenen Position auch bei defektem Messgeber gewährleistet werden.

In einer vorteilhaften Ausführungsform kann die erfindungsgemäße Vorrichtung zur sicheren Überwachung von Bereichsgrenzen des Synchronmotors eingesetzt werden. In diesem Fall sind die maximalen Verfahrwege des Synchronmotors in positiver und negativer Richtung bezogen auf eine Referenzposition als Parameterwerte redundant in den Überwachungseinheiten hinterlegt.

Mit der Vorrichtung wird dann durch die Überwachungsfunktionen der Überwachungseinheiten der Synchronmotor mit sicherer Geschwindigkeit betrieben, so dass die Anlage in die Referenzposition eingefahren wird, die durch Signale von Schaltern, Absolutgebern oder dergleichen definiert ist. Die Referenzposition wird dann als Parameterwert an die Überwachungseinheiten übergeben. Dann erfolgt fortlaufend in den Überwachungseinheiten die sichere Überwachung der Einhaltung der Bereichsgrenzen relativ zur Referenzposition.

Die erfindungsgemäße Vorrichtung ist generell für Synchronmotoren mit einem linearen und einem rotativen Aufbau einsetzbar.

Die Erfindung wird im Nachstehenden anhand der Zeichnung erläutert. Es zeigt:

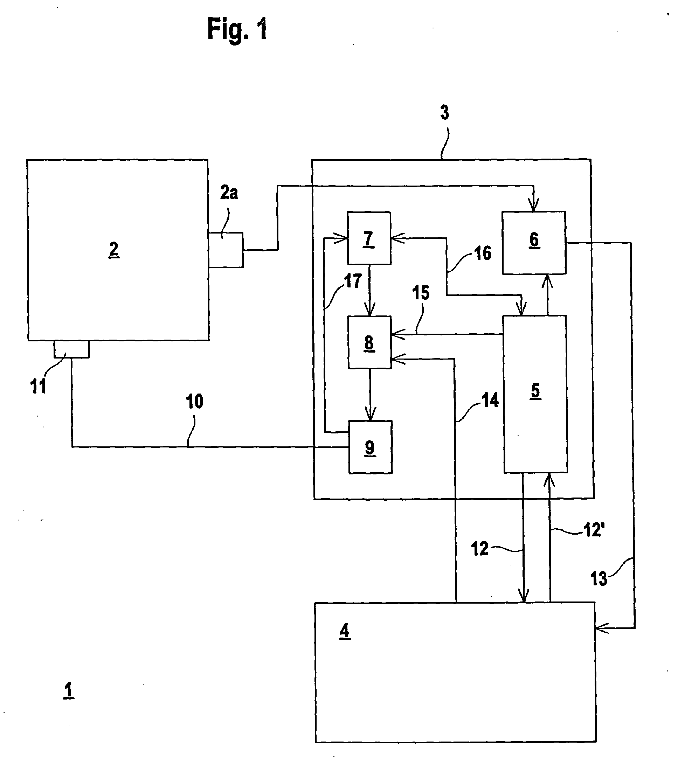

- Figur 1:: Blockschaltbild einer Vorrichtung zum Betrieb eines Synchronmotors.

Figur 1 zeigt schematisch den Aufbau einer Vorrichtung 1 zum Betrieb eines Synchronmotors 2. Der Synchronmotor 2 ist im vorliegenden Fall als rotativer Antrieb mit einem Rotor und Stator ausgebildet.

Die Vorrichtung 1 umfasst eine Verstärkereinheit 3 zur Ansteuerung des Synchronmotors 2 sowie eine externe Steuerung 4, mittels derer der Betrieb des Synchronmotors 2 steuerbar ist. Die Steuerung 4 kann beispielsweise von einer SPS-Steuerung oder einer CNC-Steuerung gebildet sein.

Die Verstärkereinheit 3 umfasst eine Zentraleinheit 5, die als Mikroprozessor oder dergleichen ausgebildet sein kann. An diese Zentraleinheit 5 sind eine Auswerteschaltung 6, ein Funktionsmodul 7 und eine Relaisanordnung 8, die auf eine Leistungsendstufe 9 geführt ist, angeschlossen.

In der Auswerteschaltung 6 werden in einem Messgeber 2a generierte Messwerte ausgewertet. Die Auswerteschaltung 6 besteht bevorzugt aus einem ASIC oder FPGA. Der Messgeber 2a ist am Synchronmotor 2 angeordnet und im vorliegenden Fall als Inkrementalgeber zur Bestimmung der Drehzahl des Synchronmotors 2 ausgebildet. Alternativ kann der Messgeber 2a als Absolutgeber, Resolver, Halbsensor oder dergleichen ausgebildet sein.

Das Funktionsmodul 7 ist bevorzugt als ASIC oder FPGA ausgebildet und bildet eine Ansteuerstufe für den Synchronmotor 2. Alternativ kann das Funktionsmodul 7 ebenso wie die Auswerteschaltung 6 aus diskreten Elektronikkomponenten sowie einem Microcontroller bestehen. Im Funktionsmodul wird die Stromregelung des Synchronmotors durchgeführt. Zudem werden dort Ansteuerimpulse für die Leistungsendstufe 9 berechnet und erzeugt. Hierzu ist das Funktionsmodul 7 über die Relaisanordnung 8 an die Leistungsendstufe 9 angeschlossen, die aus einer Schaltungsanordnung mehrerer Transistoren besteht.

Die Relaisanordnung 8 besteht aus mindestens zwei in Reihe geschalteten, unabhängig voneinander schaltbaren Schaltelementen, bevorzugt von Relais spezieller Bauart, insbesondere von Sicherheitsrelais mit Zwangsführung, gebildet sind. Die Steuerung 4 wirkt auf mindestens eines der Schaltelemente, die Zentraleinheit 5 auf mindestens ein weiteres Schaltelement. Die Betätigung eines Schaltelements verhindert die Ansteuerung der Leistungsendstufe 9 derart, dass das Entstehen eines der Bewegung des Synchronmotors 2 erzeugenden Drehfeldes unterbunden wird und / oder die Energiezufuhr der Leistungsendstufe unterbunden wird.

Die Leistungsendstufe 9 ist über eine Leitung 10 an einen Spulen 11 des Synchronmotors 2 angeschlossen.

Die Steuerung 4 ist über bidirektionale Zuleitungen 12, 12` an die Steuerung 4 angeschlossen.

Die in der Auswerteschaltung 6 registrierten Ist-Positionen des Synchronmotors 2 werden über eine Leitung 13 in die Steuerung 4 eingelesen

Zur Funktionskontrolle des Synchronmotors 2 ist eine Leitung 14 von der Steuerung 4 auf ein erstes Relais der Relaisanordnung 8 und eine Leitung 15 von der Zentraleinheit 5 auf das zweite Relais der Relaisanordnung 8 geführt.

Schließlich ist das Funktionsmodul 7 mit der Zentraleinheit 5 über die Leitung 16 verbunden.

Im Normalbetrieb der Vorrichtung 1 gibt die Steuerung 4 Sollwerte für den Betrieb des Synchronmotors 2 vor, die von dem Funktionsmodul 7 umgesetzt werden. Hierzu steuert das Funktionsmodul 7 die Leistungsendstufe 9 in geeigneter Weise an.

In einer ersten Ausführungsform übermittelt die Steuerung 4 über die Zentraleinheit 5 ein Soll-Drehmoment mit Betrag und Richtung an das Funktionsmodul 7.

Zur Gewährleistung eines sicheren Halts oder der sicheren Einhaltung eines Grenzwerts der Geschwindigkeit übernimmt die Steuerung 4 die Funktion einer ersten Überwachungseinheit. Die Überwachungseinheiten sind über die bidirektionalen Zuleitungen 12, 12' zwischen Zentraleinheit 5 und Steuerung 4 gekoppelt. Dabei erfolgt im vorliegenden Fall über den Datenaustausch über die bidirektionalen Zuleitungen 12, 12' eine gegenseitige Überwachung der Überwachungseinheiten.

Zum Betrieb der so ausgebildeten, ein vorgegebenes Sicherheitsniveau aufweisenden Vorrichtung 1 wird mittels der ersten Überwachungseinheit die Geschwindigkeit des Synchronmotors 2 in Abhängigkeit der Messwerte des Messgebers 2a geregelt.

Zur Gewährleistung der Einhaltung des Grenzwerts der Geschwindigkeit des Synchronmotors 2 ist dieser als Parameterwert in beiden Überwachungseinheiten separat hinterlegt. Im Fall der Gewährleistung eines sicheren Halts ist der Grenzwert Null in den Überwachungseinheiten hinterlegt.

Soll insbesondere bei Auftreten eines internen Fehlers in der Vorrichtung 1 eine sichere Begrenzung des Synchronmotors 2 durchgeführt werden, so wird in der Steuerung 4 als erster Überwachungseinheit die Geschwindigkeit auf den vorgegebenen Grenzwert geregelt. Die Regelung erfolgt in Abhängigkeit der differenzierten Messwerte des Messgebers 2a.

Zudem wird mit dem Funktionsmodul 7 als zweiter Überwachungseinheit die Kommutierung des Synchronmotors 2 entsprechend dem gespeicherten Grenzwert begrenzt. Dabei wird im vorliegenden Fall die Änderung des Kommutierungswinkels pro Zeiteinheit, der ein Maß für die Drehzahl des Rotors des Synchronmotors 2 bildet, mittels des Funktionsmoduls 7 auf einen entsprechenden Wert begrenzt.

Zur Begrenzung der Geschwindigkeit mittels der ersten Überwachungseinheit steuert die Steuerung 4 die Relaisanordnung 8 an, um eine Überschreitung des Grenzwerts der Geschwindigkeit des Synchronmotors 2 zu verhindern. Hierzu wird die Energiezufuhr zur Leistungsendstufe 9 unterbunden und / oder die Ansteuerung der Leistungsendstufe 9 wird unterbrochen, so dass das Entstehen eines die Bewegung des Synchronmotors 2 erzeugenden Drehfelds unterbunden wird.

Zur Begrenzung der Geschwindigkeit mittels der zweiten Überwachungseinheit wird mittels des Funktionsmoduls 7 die Leistungsendstufe 9 angesteuert, so dass der Synchronmotor 2 entsprechend ausläuft.

Die Überwachungseinheiten steuern somit die Leistungsendstufe 9 und die Relaisanordnung 8 als unabhängige Schaltereinheiten zur Begrenzung der Motorgeschwindigkeit in der Form an, dass das Entstehen eines die Bewegung des Synchronmotors 2 erzeugenden Drehfelds unterbunden wird. Zudem bilden die Überwachungseinheiten unabhängige diversitäre Einheiten zur Begrenzung der Motorgeschwindigkeit.

Damit wird ein hohes Sicherheitsniveau bei der Begrenzung der Motorgeschwindigkeit erzielt, die insbesondere auch noch bei Ausfall des Messgebers 2a funktionsfähig bleibt.

Generell kann zur Unterbindung der Zündung der Transistoren in der Leistungsendstufe 9 diese durch das Funktionsmodul 7 deaktiviert werden, indem dieses keine Ansteuerimpulse mehr generiert. Alternativ kann eines der Relais der Relaisanordnung 8 über die Steuerung 4 abgeschaltet werden oder das andere Relais über die Zentraleinheit 5 abgeschaltet werden.

Die Gewährleistung eines sicheren Halts des Synchronmotors 2 erfolgt in analoger Weise. Die Geschwindigkeit des Synchronmotors 2 wird von der die erste Überwachungseinheit bildenden Steuerung 4 auf den in diesem Fall Null betragenden Grenzwert geregelt.

Das Funktionsmodul 7 prüft in diesem Fall den Betrag des Kommutierungswinkels und setzt diesen auf einen dem Grenzwert der Motorgeschwindigkeit entsprechenden Wert.

In einer zweiten Ausführungsform wird der Synchronmotor 2 der Vorrichtung 1 ähnlich wie ein Schrittmotor betrieben. In diesem Fall übermittelt die Steuerung 4 eine Soll-Drehzahl mit Betrag und Vorzeichen an das Funktionsmodul 7, welches dann den Synchronmotor 2 über die Leistungsendstufe 9 entsprechend ansteuert. Dabei wird über das Funktionsmodul 7 ein konstanter Strom für den Synchronmotor 2 vorgegeben.

Auch in diesem Fall kann mit den Überwachungseinheiten die sichere Einhaltung einer Grenzgeschwindigkeit oder die Durchführung eines sicheren Halts des Synchronmotors 2 durchgeführt werden.

Die Geschwindigkeit des Synchronmotors 2 wird wiederum über die Steuerung 4 in Abhängigkeit der Messwerte des Messgebers 2a geregelt.

Der Grenzwert zur sicheren Einhaltung einer Grenzgeschwindigkeit ist wiederum in beiden Überwachungseinheiten, das heißt in der Steuerung 4 und im Funktionsmodul 7, hinterlegt.

Wird in der Steuerung 4 die Gefahr eines Überschreitens des Grenzwerts erkannt, schaltet diese die Relaisanordnung 8 ab und unterbricht so die Stromzufuhr zum Synchronmotor 2 und / oder verhindert das Entstehen eines die Bewegung des Synchronmotors 2 erzeugenden Drehfelds.

Wird in dem Funktionsmodul 7 erkannt, dass der Grenzwert überschritten wird, so deaktiviert dieses unabhängig von den Signalen der Steuerung 4 die Leistungsendstufe 9 und deaktiviert insbesondere dadurch die in der Steuerung 4 durchgeführte Geschwindigkeitsregelung. Zudem kann das Funktionsmodul 7 im Fall einer Unterbrechung der Geschwindigkeitsregelung der Steuerung 4 an diese eine Fehlermeldung aussenden. Sobald die Steuerung 4 den Fehler registriert hat, schaltet diese die Relaisanordnung 8 ab, so dass nicht nur das Funktionsmodul 7, sondern auch die Steuerung 4 den Synchronmotor 2 in den sicheren Zustand überführt.

Im Fall der Durchführung eines sicheren Halts erfolgt in der Steuerung 4 die Regelung der Geschwindigkeit auf den Grenzwert Null, während in dem Funktionsmodul 7 zur Einhaltung des Grenzwerts der Kommutierungswinkel des Synchronmotors 2 unabhängig von den Vorgaben der Steuerung 4 auf einen festen Wert einrastet.

### Bezugszeichenliste

- (1): Vorrichtung
- (2): Synchronmotor
- (2a): Messgeber
- (3): Verstärkereinheit
- (4): Steuerung
- (5): Zentraleinheit
- (6): Auswerteschaltung
- (7): Funktionsmodul
- (8): Relaisanordnung
- (9): Leistungsendstufe
- (10): Leitung
- (11): Spulen
- (12): Zuleitung
- (12'): Zuleitung
- (13): Leitung
- (14): Leitung
- (15): Leitung
- (16): Leitung
- (17): Leitung

## Patentansprüche

1. Vorrichtung (1) zum Betrieb eines Synchronmotors (2) mit einer ersten Überwachungseinheit, in welcher zur Generierung eines ersten Steuersignals in Abhängigkeit der Messwerte eines Messgebers die Einhaltung eines Grenzwerts der Geschwindigkeit des Synchronmotors (2) überprüft wird, mit einer zweiten Überwachungseinheit, in welcher die Einhaltung eines Grenzwerts des Kommutierungswinkels des Synchronmotors (2) oder dessen zeitlicher Änderung überprüft wird, und mit wenigstens einer Schalteinheit, mittels derer der Synchronmotor (2) zur Einhaltung der Grenzwerte in Abhängigkeit der Steuersignale angesteuert wird.

2. Vorrichtung nach Anspruch 1, **dadurch gekennzeichnet, dass** die Überwachungseinheiten zur gegenseitigen Überwachung über bidirektionale Zuleitungen (12, 12') gekoppelt sind.

3. Vorrichtung nach Anspruch 1, **dadurch gekennzeichnet, dass** mit ersten Steuersignalen der ersten Überwachungseinheit eine erste Schalteinheit angesteuert wird und mit zweiten Steuersignalen der zweiten Überwachungseinheit eine zweite Schalteinheit angesteuert wird.

4. Vorrichtung nach einem der Ansprüche 1 - 3, **dadurch gekennzeichnet, dass** mittels des Messgebers die Drehzahl des Synchronmotors (2) erfasst wird.

5. Vorrichtung nach Anspruch 4, **dadurch gekennzeichnet, dass** die Messwerte des Messgebers in der ersten Überwachungseinheit differenziert und mit dem Grenzwert der Geschwindigkeit verglichen werden.

6. Vorrichtung nach einem der Ansprüche 1 - 5, **dadurch gekennzeichnet, dass** die erste Überwachungseinheit von einer Steuerung (4) gebildet ist.

7. Vorrichtung nach Anspruch 6, **dadurch gekennzeichnet, dass** die Steuerung (4) von einer SPS-Steuerung oder einer CNC-Steuerung gebildet ist.

8. Vorrichtung nach einem der Ansprüche 1 - 7, **dadurch gekennzeichnet, dass** dem Synchronmotor (2) eine Verstärkereinheit (3) zugeordnet ist, in welcher die zweite Überwachungseinheit integriert ist.

9. Vorrichtung nach Anspruch 8, **dadurch gekennzeichnet, dass** die Verstärkereinheit (3) ein die zweite Überwachungseinheit bildendes Funktionsmodul (7) aufweist, welches über eine Relaisanordnung (8) eine zum Synchronmotor (2) geführte Leistungsendstufe (9) ansteuert.

10. Vorrichtung nach Anspruch 9, **dadurch gekennzeichnet, dass** die Relaisanordnung (8) die erste Schalteinheit und die Leistungsendstufe (9) die zweite Schalteinheit bildet.

11. Vorrichtung nach einem der Ansprüche 8 - 10, **dadurch gekennzeichnet, dass** in der Verstärkereinheit (3) eine Auswerteschaltung (6) zur Auswertung der Messwerte des Messgebers integriert ist.

12. Vorrichtung nach einem der Ansprüche 8 - 11, **dadurch gekennzeichnet, dass** in der Verstärkereinheit (3) eine Zentraleinheit (5) integriert ist, an welche das Funktionsmodul (7) und die Auswerteschaltung (6) angeschlossen sind.

13. Vorrichtung nach Anspruch 12, **dadurch gekennzeichnet, dass** die Zentraleinheit (5) an die Steuerung (4) angeschlossen ist.

14. Vorrichtung nach einem der Ansprüche 9 - 13, **dadurch gekennzeichnet, dass** mittels der Steuerung (4) ein Soll-Drehmoment des Synchronmotors (2) an das Funktionsmodul (7) ausgebbar ist und die Geschwindigkeit des Synchronmotors (2) in Abhängigkeit der Messwerte des Messgebers geregelt wird.

15. Vorrichtung nach Anspruch 14, **dadurch gekennzeichnet, dass** zur sicheren Einhaltung eines Grenzwerts der Geschwindigkeit des Synchronmotors (2) der maximale Kommutierungswinkel pro Zeiteinheit im Funktionsmodul (7) begrenzt wird.

16. Vorrichtung nach Anspruch 15, **dadurch gekennzeichnet, dass** zur Durchführung eines sicheren Halts des Synchronmotors (2) dessen Geschwindigkeit in der Steuerung (4) auf den Sollwert Null geregelt wird und dass in dem Funktionsmodul (7) der Kommutierungswinkel auf einen vorgegebenen Sollwert eingestellt wird.

17. Vorrichtung nach einem der Ansprüche 9 - 16, **dadurch gekennzeichnet, dass** mittels der Steuerung (4) eine Soll-Drehzahl des Synchronmotors (2) an das Funktionsmodul (7) ausgegeben und die Geschwindigkeit des Synchronmotors (2) in Abhängigkeit der Messwerte des Messgebers geregelt wird und dass mittels des Funktionsmoduls (7) ein konstanter Strom für den Synchronmotor (2) vorgegeben wird.

18. Vorrichtung nach Anspruch 17, **dadurch gekennzeichnet, dass** zur sicheren Einhaltung eines Grenzwerts der Geschwindigkeit des Synchronmotors (2) mittels des Funktionsmoduls (7) die Geschwindigkeitsregelung der Steuerung (4) außer Kraft setzbar ist und eine Abschaltung des Stromes für den Synchronmotor (2) durchführbar ist.

19. Vorrichtung nach Anspruch 18, **dadurch gekennzeichnet, dass** im Fehlerfall von der Steuerung (4) ein Abschaltbefehl für den Synchronmotor (2) generiert wird.

20. Vorrichtung nach Anspruch 19, **dadurch gekennzeichnet, dass** zur Durchführung eines sicheren Halts des Synchronmotors (2) dessen Geschwindigkeit in der Steuerung (4) auf den Sollwert Null geregelt wird, und dass in dem Funktionsmodul (7) der Kommutierungswinkel auf einen vorgegebenen Sollwert eingestellt wird.
